# EUROPEAN PATENT SPECIFICATION

(11) **EP 4 136 960 B1**
(45) Date of publication and mention of the grant of the patent: **09.04.2025**
(21) Application number: 21191646.5
(22) Date of filing: 17.08.2021
(51) Int. Cl.: A01G 3/037, G01D 5/22

(54) **SYSTEM AND METHOD, FOR DETERMINING AN ABSOLUTE POSITION OF A MOVING ELEMENT OF AN HANDHELD POWER TOOL**
SYSTEM UND VERFAHREN ZUR BESTIMMUNG EINER ABSOLUTPOSITION EINES SICH BEWEGENDEN ELEMENTS EINES HANDGEHALTENEN ELEKTROWERKZEUGS
SYSTÈME ET PROCÉDÉ DE DÉTERMINATION DE POSITION ABSOLUE D'ÉLÉMENT DE DÉPLACEMENT D'OUTIL ÉLECTRIQUE PORTATIF

(43) Date of publication of application: 22.02.2023
(73) Proprietor: Felco SA, 2206 Les Geneveys-sur-Coffrane (CH)
(72) Inventor: Winter, Christophe, 1422 Grandson (CH)
(74) Representative: P&TS SA (AG, Ltd.)

(56) References cited:
- EP-A1- 1 738 140
- WO-A1-2005/084416
- ES-A1- 2 382 279
- RU-C1- 2 743 368

## Description

### Technical domain

The present invention concerns a system for determining an absolute position of a moving element of an handheld power tool, and a method for the same.

### Related art

In the context of the present invention, the expression "power tool" designates an electric or electrically powered tool. The tool can be electrically powered by a stand-alone power source. During its use, it is carried by a limb of the user, for example by his hand. In particular, the same limb that carries such a tool also makes it possible to control it, for example using a trigger. A power tool does not have a stationary position during its use, because the user moves it, for example to machine a new object or to better machine the same object. In other words, a power tool is not stationary, i.e. it does not always occupy the same position. It is therefore clear in the light of this definition that a machine such as a stationary saw, for example a table circular saw or a bench shear, does not fit into the definition of a power tool given in this context.

The power source of such a power tool can be for example a battery or a battery pack. In this case, the source is usually a separate part of the tool. In particular, the user can carry the tool with one hand and simultaneously wear the power source on himself, for example using a backpack, a harness or a belt. In another case, the power source of such a power tool is in the power tool.

A power tool includes a motor or actuator for transmitting a force to an external object on which the tool is working.

Pruning shears, shears, pliers, presses, a portable chainsaw, a portable circular saw, a portable jigsaw, a planer, a crimper, ripper, etc. for agricultural, viticultural, arboreal, industrial, craft, textile, food, medical, etc. applications are non-limiting examples of power tools according to the invention.

A power tool comprises a machining member and a support member for this object. The machining member makes it possible to machine an object and comes into direct contact with this object. It is mobile during the machining of the object and is actuated by an actuator of the power tool.

In the context of the present invention, the word "machining" indicates any operation performed on the object that makes it possible to transform it, for example to cut it, press it, slice it, plane it etc.

The support member supports the object during its machining and is fixed during the machining of the object. The support member is not actuated by the actuator of the power tool. Its presence is necessary to achieve this machining. The support member is also in direct contact with this object during its machining.

In the case where the power tool is a pruner or a power pruning shears, its movable blade is the machining member, because it allows an object, such as a branch, to be cut, and the counter blade is the support member, because it supports the branch while cutting.

In the case where the power tool is a circular saw, its rotary blade is the machining member, because it allows an object, such as a piece of wood, to be cut, and the tray including the passage for the blade and resting on the object during the cutting operation is the support member.

In the case where the power tool is a plane, its blade is the machining member, as it allows an object, such as a wooden piece, to be cut, and the plate resting on the object during the cutting operation is the support member.

In the case where the power tool is a portable chainsaw, its rotary chain is the machining member, because it allows an object to be cut, and the chain guide of the portable chainsaw, around which the rotary chain moves, is the support member.

In these types of tools, it is important to know the position, and in particular the absolute position, of some elements of the power tools which move, for example and in a non-limiting way, with a translational and/or a rotating movement, in order to ensure correct operation of the power tool.

One non limitative example of such moving elements is the trigger. In general, the trigger moves with a translational and/or a rotating movement. For example, it is useful to know the absolute position of the trigger, so that the position of the machining member corresponds to the instantaneous position of the trigger. It can be also useful to know the absolute position of the trigger, so as enter with the trigger a special command: for example and in a non-limiting way, the power tool can comprise an electronic circuit configured to detect a predetermined movement sequence of the trigger and to execute a function in response to the detection of such a sequence, as described in the document EP2659765 of the applicant.

Another non limitative example of such moving elements is the machining member. For example, if the power tool is a power pruning shears, it is useful to know not only the relative position of the movable blade with respect to the fixed counter blade, but also the absolute position of the movable blade, for example and in a non-limitative way for opening the movable blade with regard to the fixed blade at a predetermined position, not necessarily being the maximum possible opening, or the half of this maximum. Moreover, some safety systems for handheld power tool exploit the absolute position of the machining member, so as to reduce the speed of the actuator and/or so as to generate an alarm, in order to protect the user of the tool.

Another non limitative example of such moving elements are all the components in the tool, whose movement allow the tool to work, for example the components of the transmission relating the actuator to the machining member, as for example and in a non-limitative way a cam, a connecting rod, a ball screw, a ball nut, the actuator, a gear, etc.

Some known documents disclose cutting tools comprising a device for magnetic measuring the position of the mobile blade, this device comprising one or more magnets on the mobile blade and Hall effect sensors on the body of the tool, such as for example WO2005084416, EP2550135 and EP1452280.

Other documents disclose cutting tools comprising a generic magnetic sensor placed on the body of the cutting tool, allowing to measure the position a movable blade fitted with a magnet, as for example EP3225100 and EP2353366.

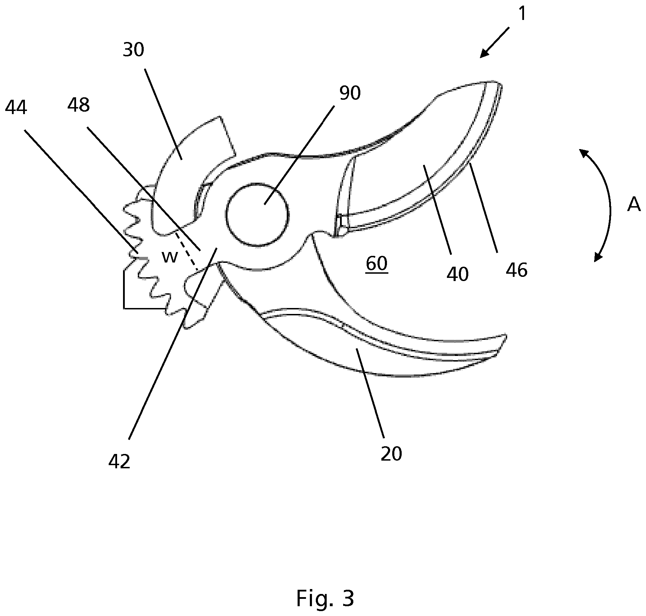

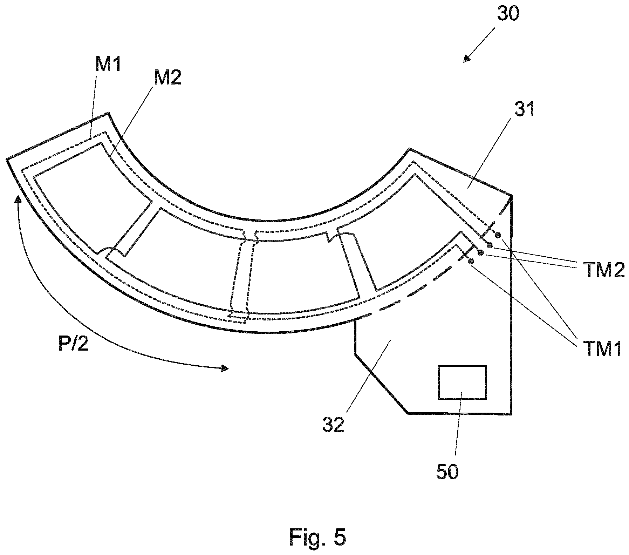

The document RU2743368 describes a portable power tool in which the movement of the blade is carried out with a lighter and less noisy transmission system. When the power button is pressed, a first magnetizing coil is energized by creating a magnetic flux passing through a magnetic housing. The magnetic flux is divided into a working magnetic flux passing through a magnetic sleeve and a first non-magnetic sleeve, a magnetic flux passing through a first non-magnetic insert, and a magnetic flux passing along the first magnetization coil. Due to the working magnetic flux, an electromagnetic force occurs which moves the armature and therefore the blade to the left (Figure 3). On energizing a second magnetizing coil an electromagnetic force occurs which moves armature and hence blade to the right (Figure 5), for similar reasons. The described system does not determine the absolute position of the moving elements.

The document EP1738140 describes an inductive position sensor for detecting a position of a movable coupling element. The sensor comprises a transmitter coil and a receiver coil including two loops, the receiver coil generating a receive signal when the transmitter coil is excited by an alternating current source. The movable coupling element modifies the inductive coupling between the transmitting coil and the receiving coil so that the receive signal is sensitive to the position of the coupling element. The main application of *this sensor is for detecting the position of throttle pedal in an automotive vehicle.*

Known systems for determining the position of a moving element, as a movable blade of a cutting tool, require then a magnet on the machining member, for example a movable blade. Therefore, the fabrication of such cutting tools requires the placing of this magnet on the movable blade, rendering it more complex. Moreover, the magnet shall be placed on the movable blade, so that its presence does not interfere with the cutting action.

Moreover, those known systems for determining the position of an element do not determine this position in a robust way, as they are sensible to perturbations. Finally, those known systems for determining the position of an element do not determine this position in a precise way, as the precision is in the order of some millimetres around the sensor position and are barely sensitive further than a tens of millimetres.

### Short disclosure of the invention

An aim of the present invention is the provision of a system for determining the position of a moving element of an handheld power tool, that overcomes the shortcomings and limitations of the state of the art.

Another aim of the invention is the provision of a system for determining the position of a moving element of an handheld power tool, wherein the fabrication of such handheld power tool is simpler with regard to known solutions.

Another aim of the invention is the provision of a system for determining the position of a moving element of an handheld power tool, wherein the determination of this position is less sensible to perturbations with regard to known solutions.

Another aim of the invention is the provision of a system for determining the position of a moving element of an handheld power tool, wherein the determination of this position is more precise with regard to known solutions.

According to the invention, these aims are attained by the object of the attached claims, and especially by the system for determining the position of a moving element of an handheld power tool and by the method for determining the position of a moving element of an handheld power tool according to the independent claims.

The system for determining an absolute position of a moving element of an handheld power tool according to the invention as disclosed in independent claim 1.

In particular, if the moving element is made at least in part of a ferromagnetic material, the modification of the magnetic flux is related (at least) to a change in mutual inductance between the excitation coil and the measuring coil. If the moving element is made at least in part of an electrically conductive material, the modification of the magnetic flux is related the presence of Eddy currents (Foucault's currents), which constitute losses.

According to the invention, the system comprises also a computing module, arranged to determine an absolute position of this moving element based on this (modified) magnetic flux.

In one preferred embodiment, the measuring coil is an open circuit and this magnetic flux modifies an (induced) voltage in the measuring coil, for example a voltage between two electrical terminals of the measuring coil. In one preferred embodiment, the computing module is arranged to determine the absolute position of this element based on this voltage. In another embodiment, the measuring coil is a closed circuit and this magnetic flux modifies an (induced) current in the measuring coil. In this embodiment, the computing module is arranged to determine the absolute position of this element based on this current.

The system according to the invention does not require a magnet (or any other additional element) on the machining member of the handheld power tool. Therefore, the fabrication of such handheld power tool is simpler with regard to known solutions. Moreover, the working of the tool is not disturbed by the presence of an additional element, as a magnet, on the machining member.

The system according to the invention allows a determination of the position of the moving element less sensible to perturbations. Tests performed by the applicant have shown that the system is more robust and reliable than known solutions.

The system according to the invention allows a determination of the position of the moving element more precise with regard to known solutions. Tests performed by the applicant have shown that this precision is in the order of micro-meters.

In one embodiment, the handheld power tool comprises a machining member and a support member. The actuator is connected to the machining member, so as to move the machining member with regard to the support member. In this embodiment, this moving element is at least a part of the machining member, or this element is connected to the machining member, so that once the machining member is moved, the element is also moved. This embodiment allows therefore to determine the absolute position of (at least a part of) the machining member of the handheld power tool.

In one embodiment, the handheld power tool is a power pruning shears comprising a movable blade, this moving element is at least a part of the movable blade, or this element is connected to the movable blade, so that once the movable blade is moved, the element is also moved. This embodiment allows therefore to determine the absolute position of (at least a part of) the movable blade of the power pruning shears.

In one embodiment, the handheld power tool comprises a trigger arranged to be pressed by the user, so as to move the machining member with regard to the support member. In this embodiment, the moving element is at least a part of this trigger or this element is connected to the trigger, so that once the trigger is moved, the element is also moved. This embodiment allows therefore to determine the absolute position of (at least a part of) the trigger of the power tool.

In one embodiment, the handheld power tool comprises a Printed Circuit Board ("PCB" in the following), wherein this PCB comprises the excitation coil and the measuring coil(s).

In one embodiment, the PCB comprises also the computing module.

In one embodiment, the element moves on a trajectory defining a form and the PCB has a shape comprising this form. For example, if the element moves on a C-shaped trajectory, and the PCB will have a C-shaped form.

In one embodiment, the element moves on a trajectory defining a form and the excitation coil has a shape comprising this form. For example, if the element moves on a C-shaped trajectory, the excitation coil will have a C-shaped form.

According to the invention, the system comprises two measuring coils. In this embodiment, the absolute position of the moving element is proportional to the second harmonic of the measured signal.

According to the invention, each of the measuring coils has a shape having a period, wherein the measuring coils are offset by a quarter of this period.

In one embodiment, a half of this period is substantially equal to a dimension of the moving element, e.g. a width of the moving element.

In one embodiment, the handheld power tool comprises an electrically insulator element between the body of the handheld power tool and the PCB, so as to electrically isolate the PCB from the body.

In one embodiment, this electrically insulator element is made at least in part of a non-electrically conductive and ferromagnetic material, as ferrite.

In one embodiment, the PCB is placed between the machining member and the support member. If the handheld power tool is a power pruning shears, the PCB can be placed between its movable blade and its fixed counter blade.

The present invention concerns also a method for determining an absolute position of a moving element of an handheld power tool according to claim 13**.**

### Short description of the drawings

Exemplar embodiments of the invention are disclosed in the description and illustrated by the drawings in which:
Figure 1 illustrates an example of an embodiment of the system according to the invention.
Figure 2 illustrates a lateral view of a part of the system according to one embodiment the invention, wherein the movable blade is closed with respect to the fixed counter blade.
Figure 3 illustrates a lateral view of a part of the system of Figure 2, wherein the movable blade is opened with respect to the fixed counter blade.
Figure 4A illustrates a perspective view of the fixed blade of the part of the system of Figure 2.
Figure 4B illustrates a perspective view of the fixed blade of Figure 4A, with a PCB comprising the (not illustrated) measuring and excitation coils of an embodiment of the system according to the invention.
Figure 4C illustrates a perspective view of the fixed blade and of the PCB of Figure 4B, with a movable blade.
Figure 5 illustrates a top view of an embodiment of the PCB comprising the measuring coils of an embodiment of the system according to the invention.
Figure 6 illustrates a top view of an embodiment of the PCB comprising the excitation coil of an embodiment of the system according to the invention.
Figure 7 is an example of an electrically insulator element of an embodiment of the system according to the invention.

### Examples of embodiments of the present invention

In the following description given by way of example, reference will be made, for reasons of simplicity, to a power pruning shears. The invention however is not limited to such an instrument. The disclosure is also not limited to agriculture, but also includes, for example, shears, pliers, presses, chainsaws, portable circular saws, portable jigsaws, planers, crimpers, rippers, etc. for agricultural, viticultural, arboreal, industrial, craft, textile, food, medical, etc. applications.

In the following description given by way of example, reference will be made, for reasons of simplicity, to the determination of the absolute position of a machining member of the handheld power tool (the movable blade of the power pruning shears). The disclosure is also not limited to this moving element, but applies also to other moving elements of the tools, for example the trigger, any component of the transmission relating the actuator to the machining member, as for example and in a non-limitative way a cam, a connecting rod, a ball screw, a ball nut, the actuator, a gear, etc. or any other element of the handheld power tool, which moves with regard to the (fixed) body of the handheld power tool.

In the following description given by way of example, reference will be made, for reasons of simplicity, to an element moving according to a C-shaped trajectory (the movable blade of the power pruning shears). The disclosure is also not limited to this C-shaped trajectory but applies also to other trajectories for the moving element, as for example and in a non-limitative way a linear trajectory, a combination of a circular and a linear trajectory, etc.

The disclosure is also not limited to the kind of the speed (constant, accelerated, decelerated, continuous, discontinuous, etc.) of the moving element.

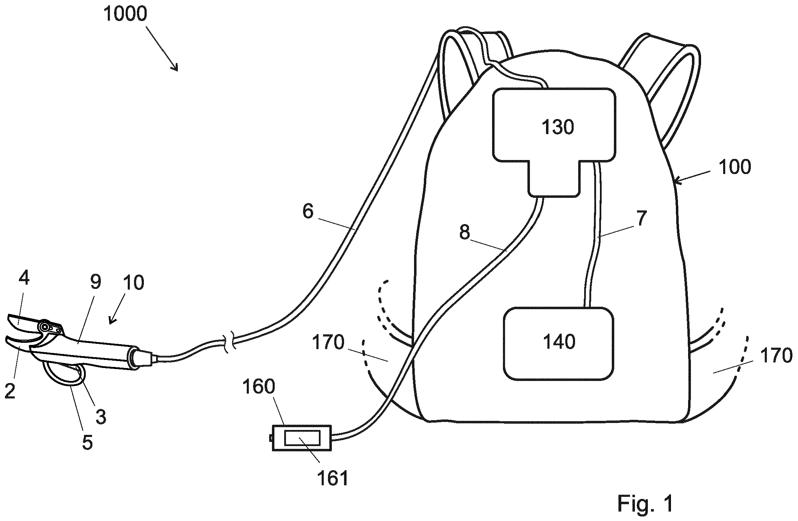

A schematic example of a handheld power tool 10 of the system according to the invention is illustrated in Figure 1. This tool is arranged to be worn by a user, for example by a limb of the user such as a hand. In a variant, this same hand can control the tool 10 via a trigger 3. In the illustrated embodiment, the power tool 10 comprises a guard 5, a body 9, a machining member 4 and a support member 2.

The machining member 4 makes it possible to machine an object and comes into direct contact with this object. It is mobile during the machining of the object and actuated by an actuator (not shown) of the handheld power tool 10, for example an electric motor.

As explained, in the context of the present invention, the word "machining" indicates any operation performed on the object that makes it possible to transform it, for example to cut, press, slice, plane etc.

The support member 2 supports the object during its machining and is fixed during the machining of the object. The support member is not actuated by the actuator of the power tool 10. Its presence is necessary to achieve this machining. The support member 2 also comes into direct contact with this object during its machining.

In the case where the power tool 10 is a power pruning shears, its movable blade is the machining member 4, as it allows to cut an object such as a branch, and the counter blade is the support member 2 because it supports the branch during cutting.

The power tool 10 is connected by a connection element 6, namely a cable in the example of figure 1, to a control box 130 of the tool, placed in a support means 100 carried by the user, in the example a backpack. This control box 130 is connected via the connection element 7 to one or more batteries 140 in the same support means 100, and via the connection element 8 to a remote housing 160, which may comprise a display 161, and which is generally placed on a belt 170 worn by the user. In the example shown, the belt 170 is part of the backpack 100.

The example of Figure 1 should not be considered limitative and other variants can be imagined, for example the replacement of at least one of the wired connection elements 6 to 8 by a wireless connection, the integration of the control box 130 and/or the battery(s) 140 in the body 9 of the tool, and/or the absence of a remote housing 160, and so on.

The power pruner shears 10 also includes a transmission (not shown) connecting the actuator (not shown) of the power pruner shears 10 to the movable blade 4, so as to allow movement of the movable blade 4 relative to the counter blade 2.

Non-limiting examples of transmission include a screw-to-ball/nut system, in which the screw moves with a translational movement and the nut turns with a rotational movement and/or in which the screw which is moves with a rotational motion and the nut moves with a translational motion, connecting rods, cams, etc.

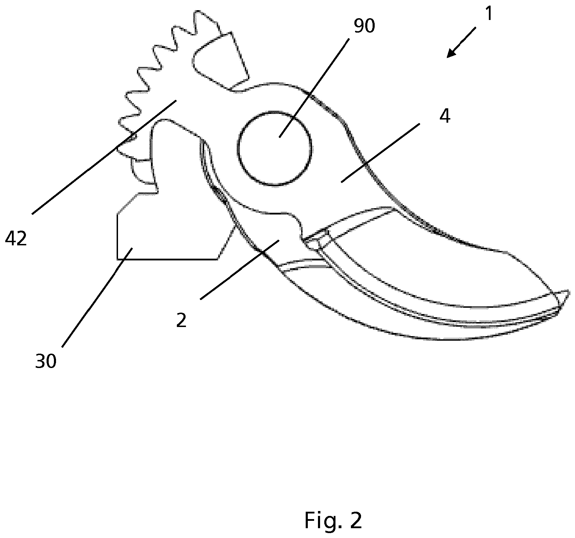

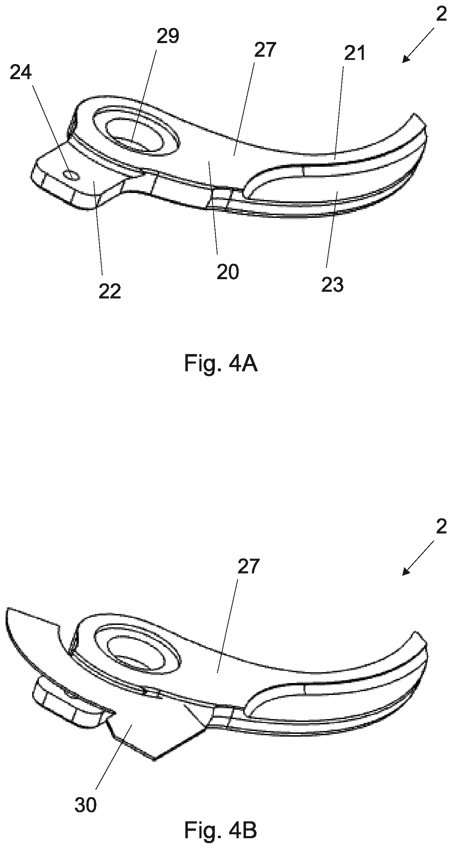

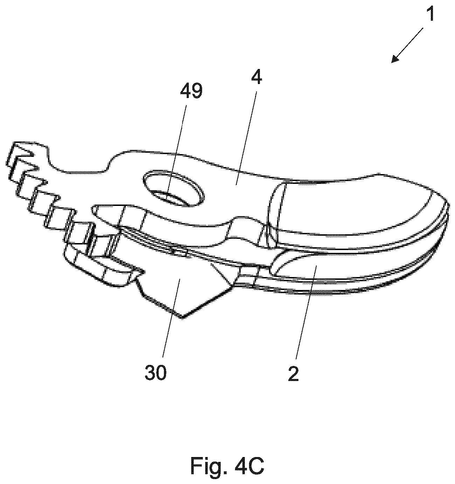

As visible in Figures 2 to 3, the movable blade 4 and the counter blade 2 are superimposed and connected by a connection element, in the example a bolt 90. This connection element is at least partly received by through holes of the movable blade 4 (reference 49 in Figure 4C) and of the counter blade 2 (reference 29 in Figure 4A), which are aligned during the superposition of the two blades (Figure 4C). The movable blade 4 is arranged to pivot relative to the counter blade 2 around an axis of rotation (not illustrated) which passes through the connection element.

The movable blade 4 comprises a cutting part 40 and an actuating part 42, the two parts extending from the connection element 90 and forming an angle between them, of approximately 180 ° in the example illustrated in Figures 2 to 3. However, the value of this angle is not limitative and other different angles are possible.

In the example of Figures 2 to 3, the actuating part 42 of the movable blade 4 comprises a connection element with the transmission of the electric pruning shears 10, a set of teeth 44 in the example illustrated. In the example, a blade actuation arm 48 connects this set of teeth 44 to the cutting part 40. The transmission, via the set of teeth 44 and the blade actuation arm 48, causes the rotation of the movable blade 4 around its axis of rotation. During this rotation, the cutting part 40 can move away from the counter blade 2 (Figure 3), thus allowing the user to insert an object to be cut into the space 60 which is created between the cutting part 40 and the counter blade 2, and then can approach to the counter blade 2 (Figure 2), thus making the cut of this object. The cutting part 40 of the movable blade 4 in fact comprises a sharp edge 46, which allows this cut.

The cutting part 40 of the movable blade of Figures 2 to 3 has a substantially linear shape. However, other forms can be considered, for example and in a non-limiting way a shape of a beak, slightly curved. In the example of Figures 2 to 3, the free end of the cutting part 40 in the plane of a side surface of the movable blade 4 has a greater width with respect to the width of the cutting part 40 in correspondence of the connection element 90. In the example of Figures 2 to 3, the width w of the blade actuation arm 48 is lower than the widths of the cutting part 40.

Although in the examples of Figures 2 to 3 the movable blade is not flat, in other examples (not shown) it may be flat.

In one example, in order to determine the absolute position of the movable blade 4 with the system according to the invention, the movable blade 4 should be made at least in part of a ferromagnetic material and/or by an electrically conductive material (for example and without limitation in steel or in hardened steel).

The counter blade 2, visible in Figure 4A, comprises a support part 20 and a fixing part 22, the two parts extending from the connection means and forming an angle between them, greater than 90° in the example illustrated on Figure 4A. The support part 20 allows to support an object to be cut during the cutting and at least partially comes into direct contact with this object.

The fixing part 22 allows the counter blade 2 to be fixed to the body 9 of the power pruning shears 10, in order to make the body 9 integral with the counter blade 2.

In the example of Figure 4C, the fixing part 22 of the counter blade 2 comprises means for fixing the counter blade 2 with the body 9 of the power pruning shears 10, an hole 24 in the illustrated example.

The support part 20 of the counter blade 2 of the example has a hook shape, slightly curved. However, other forms can be considered. The free end of the support part 20 in the plane of a side surface of the counter blade 2 has a greater width with respect to the width of the support part in correspondence of the connection element 90.

Although in the illustrated example the counter blade 2 is not flat, in other examples it may be flat. In the illustrated example the counter blade 2, its side surface 27 intended to come into contact with the movable blade 4 is not flat, but includes a sap groove 21, which makes it possible to reduce the friction surface between the movable blade and the counter blade without the risk of the blades sticking, for example when cutting sap plants. It saves time and makes trimming easier by removing dirt and sap after each cutting motion. The sap groove 21 is the part of the counter blade 2 which rubs against the movable blade 4 during its movement. It is adjacent to another surface 23 (less thick), which does not come into contact with the movable blade 4 during its movement.

The movable blade 4 and the counter blade can comprise (at least) a chamfer of the counter blade 2., i.e. a surface obtained by removing the edge of a blade. It is a bevel, which can be rounded, and whose function is to avoid sharp edges.

As illustrated in Figures 2 to 3, a PCB 30 is placed between the movable blade 4 and the counter blade 2. In particular, in the illustrated example, the PCB 30 is sandwiched between the movable blade 4 and the counter blade 2 (cf Figures 4A to 4C) and notably, it is sandwiched between the actuating part 42 of the movable blade 4 and the fixing part 22 of the counter blade 2.

In particular, the thickness of the fixing part 22 of the counter blade 2 ("first thickness" in the following) is lower than the thickness of its support part 20 ("second thickness" in the following). In one preferred embodiment, the PCB 30 has a thickness which is substantially equal to the difference between the second thickness and the first thickness, so that, once the PCB 30 is placed on the fixing part 22, the surface of the PCB 30 opposite to the fixing part 22 is substantially planar with the side surface 27 of the counter blade 2, as illustrated in Figure 4B.

In another (not illustrated embodiment), the PCB 30 is placed on the surface of the movable blade 4 opposite to the surface facing the counter blade 2. However, this embodiment is less advantageous: in fact, in case of a replacement of a (used) movable blade, the PCB should be removed as well and a new calibration of the system according to the invention is necessary.

The embodiment wherein the PCB 30 is sandwiched between the movable blade 4 and the counter blade 2 is more advantageous, as the PCB 30 can be placed once when the handheld power tool 10 is assembled, and calibrated once during or after the assembling. The (used) movable blade 4 can be replaced without removing the PCB 30 and without recalibrating the system according to the invention.

In one preferred embodiment, since the movable blade 4 moves on a C-shaped trajectory (as indicated by the arrow A in Figure 3), the PCB 30 comprises a C-shaped part 31, as illustrated for example in Figure 5. In one embodiment, this C-shaped part 31 is arranged to face the blade actuating arm 48, as illustrated for example in Figures 2 to 3.

In one preferred embodiment, the PCB 30 comprises another (second) part 32, visible for example in Figure 5, adjacent to the C-shaped part 31. The shape of the second part 32 is arranged to receive some electrical components, for example the computing module 50 of the invention, and it is arranged so as to render the whole system more ergonomic.

In another (not illustrated) embodiment, the PCB 30 comprises only the C-shaped part 31 and the computing module 50 is placed away, for example in the body 9 of the power pruning shears 10, electrically connected to the C-shaped part 31. However, it is preferred to place the computing module 50 sufficiently near to the measuring coil(s), for improving the measure quality.

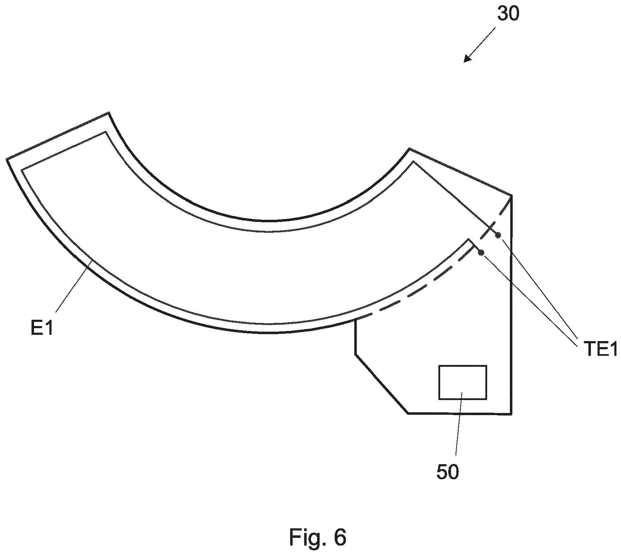

In one embodiment, the PCB 30 comprises at least one measuring coil (two measuring coils M1 and M2 in Figure 5). In one embodiment, the PCB comprises (also) at least one excitation coil (one excitation coil E1 in Figure 6).

The measuring coil(s) and the excitation coil(s) can be on the same face of the PCB or on two opposite faces.

In the examples of Figures 5 and 6, the measuring coil(s) and the excitation coil(s) are one the same face of the PCB 30, in particular on the C-shaped part 31 of the PCB 30. For clarity reasons only, the measuring coil(s) M1, M2 of Figure 5 have been illustrated without the excitation coil E1 and the excitation coil E1 of Figure 6 has been illustrated without the measuring coil(s) M1, M2.

According to the invention, the excitation coil(s) E1 is(are) arranged to conduct an alternating excitation current, wherein the alternating excitation current generates a magnetic flux traversing two measuring coils M1, M2.

In one embodiment, the excitation coil E1 comprises electrical terminals TE1, visible on Figure 6, arranged to be connected to an alternating current source. In one embodiment, the alternating current source belongs to the computing module 50.

According to the invention, the moving element (the movable blade 4 in the example of the Figures) is arranged to be moved by the actuator of the power pruning shears with regard to the body 9 of the power pruning shears, and the moving of this element modifies the magnetic flux.

According to the invention, the system comprises a computing module 50, arranged to determine an absolute position of this element based on the (modified) magnetic flux.

In particular, if the moving element is made at least in part of a ferromagnetic material, the modification of the magnetic flux is related (at least) to a change in mutual inductance between the excitation coil E1 and the measuring coil(s) M1, M2. If the moving element is made at least in part of an electrically conductive material the modification of the magnetic flux is related the presence of Eddy currents, which constitute losses.

In one preferred embodiment, the moving element is made of material which is both ferromagnetic and electrically conductive.

In one preferred embodiment, illustrated in Figure 5, the measuring coil(s) is(are) an open circuit and this magnetic flux modifies an (induced) voltage in the measuring coil, for example a voltage between two electrical terminals TM1, TM2 of each measuring coil M1, M2. In one preferred embodiment, the computing module 50 is arranged to determine the absolute position of this element based on this voltage.

In one preferred embodiment, those electrical terminals TM1, TM2 are electrically connected to the computing module 5.

In one embodiment, if the element (the movable blade 4) moves on a trajectory defining a form (a C-shaped form in the illustrated examples), the excitation coil E1 has a shape comprising this form, as illustrated in Figure 6.

In one embodiment, the system comprises two measuring coils M1, M2, as illustrated in Figure 5. In this embodiment, the absolute position of the moving element is proportional to the second harmonic of the sum of the measured signals.

In one embodiment, each of the measuring coils M1, M2 has the same shape having a period P. In the example of Figure 5, this shape is a squared wave. However, other periodic wave can be imagined, as a sinusoidal wave, a pulsed wave, etc. In one embodiment, the measuring coils M1, M2 are (mechanically) offset by a quarter of this period (P/4).

In one embodiment, a half of this period P is substantially equal to a dimension of the moving element, e.g. a width of the moving element. In one embodiment a half of this period P is substantially equal to the width of the blade actuating arm 48, i.e. P/2 = w.

If P/2 < w, there will be the same measurement several times on the path of the movable blade. If P/2 > w there will be a degradation in the measurement resolution.

In this embodiment, there is a coupling between the two measuring coils M1, M2 and blade actuating arm 48, in particular, the blade actuating arm 48 completely couples with the measuring coil M1 at one end of the C-shaped portion 31 of the PCB 30 (for example the left end in Figure 5), have a zero totalized flux when the blade actuating arm 48 is at the centre of the C-shaped portion 31 and the blade actuating arm 48 completely couples with the measuring coil M2 at the other end of the C-shaped portion 31 of the PCB 30 (for example the right end in Figure 5).

Although in the illustrated examples the number of (measuring and excitation) coils is limited, in another embodiments this number can be higher, so as to exploit this redundance. In one example, the PCB comprises different layers and the (measuring and excitation) coils can be distributed in those layers.

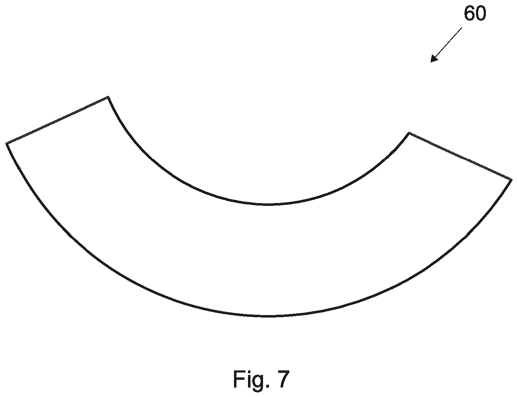

In one embodiment, the part of the PCB 30 which is not supported by the counter blade 2 (or by the support member) is supported by the body 9 of the handheld power tool 10, i.e. it enters into contact with this body 9. In general, the body 9 is (at least partially) electrically conductive. In one embodiment, the handheld power tool 10 comprises an electrically insulator element 60, arranged to be sandwiched between the body 9 of the handheld power tool and the PCB 30 (in particular its first part 31 not supported by the support member 2), so as to electrically isolate the PCB 30 from the body 9. An example of this electrically insulator element 60 is illustrated in Figure 7.

In one embodiment, this electrically insulator element 60 is made at least in part of a non-electrically conductive and ferromagnetic material, as ferrite. In this case, since the material is a non-electrically conductive material, then there are no losses as the Eddy current. In this case, the magnetic coupling between the electrically insulator element 60 and the body 9 of the handheld power tool 10 can be known and taken into consideration by the computing module 50 at the calibration of the system.

In one embodiment, if the moving element moves on a trajectory defining a form, the electrically insulator element 60 has a shape comprising this form. In the example of Figure 7, the element the electrically insulator element 60 has a C-shaped form.

In one embodiment, the surface of the electrically insulator element 60 facing the body 9 of the handheld power tool 10 and/or the surface of the electrically insulator element 60 facing the PCB 30 comprises an adhesive layer, so as to attach it to the body 9 respectively to the PCB 30.

In one embodiment, the PCB 30 comprises a user interface, comprising e.g. LEDs and/or buttons.

In one embodiment, the (excitation and measuring) coils, the computing module and the moving element form a (linear or rotative) variable differential transformer (LVDT or RVDT), wherein the moving element of the handheld power tool 10 is part of this transformer.

In one embodiment, the computing module is the integrated circuit LX3301A commercialized by Microchip / Microsemi.

### Reference signs used in the figures

- 1: Cutting head
- 2: Support member
- 3: Trigger
- 4: Machining member
- 5: Garde
- 6,7,8: Connection elements
- 9: Body
- 10: Handheld power tool
- 20: Support part of the counter blade
- 21: Sap groove
- 22: Fixing part of the counter blade
- 23: Surface of the counter blade
- 24: Hole of the fixing part
- 27: Side surface of the counter blade
- 29: Hole of the counter blade
- 30: PCB
- 31: C-shaped part (first part) of the PCB
- 32: Second part of the PCB
- 40: Cutting part of the movable blade
- 42: Actuating part of the movable blade
- 46: Sharp edge of the movable blade
- 48: Blade actuation arm
- 49: Hole of the movable blade
- 50: Computing module
- 60: Space
- 90: Connection element
- 130: Control box
- 140: Power source
- 160: Remote box
- 161: Display of the remote box
- 170: Belt
- A: Arrow
- E1: Excitation coil
- M1, M2: Measuring coil
- P: Period
- TE1: Terminal of the excitation coil
- TM1, TM2: Terminal of the measuring coil
- V1, V2: Voltages
- w: Width of the blade actuation arm

## Claims

1. System for determining an absolute position of a moving element (3; 4) of a handheld power tool (10), the system comprising:
- said handheld power tool (10), comprising:
- a body (9), comprising:
- an actuator,
- an excitation coil (E1), arranged to conduct an alternating excitation current, wherein said alternating excitation current generates a magnetic flux traversing two measuring coils (M1, M2),
- said measuring coils (M1, M2), wherein said measuring coils (M1, M2) have a shape having a period (P), wherein said measuring coils are offset by a quarter of said period (P),
- a moving element (3; 4), being made at least in part of a ferromagnetic material and/or by an electrically conductive material, said element being arranged to be moved by a user and/or by said actuator with regard to the body (9), wherein the moving of said element (3; 4) modifies said magnetic flux,
wherein said system comprises:
- a computing module (50), arranged to determine an absolute position of said moving element (3; 4) based on said magnetic flux.

2. The system of claim 1, wherein said handheld power tool (10) comprises
- a machining member (4),
- a support member (2),
wherein the actuator is connected to the machining member (4), so as to move the machining member (4) with regard to the support member (2), wherein said moving element is at least a part of said machining member (4).

3. The system of claim 1, wherein said handheld power tool (10) is a power pruning shears comprising a movable blade (4), wherein said moving element is at least a part of said movable blade (4).

4. The system of claim 1, wherein said handheld power tool (10) comprises:
- a machining member (4),
- a support member (2),
wherein the actuator is connected to the machining member (4), so as to move the machining member (4) with regard to the support member (2),
- a trigger (3) arranged to be pressed by the user, so as to move the machining member (4) with regard to the support member (2), wherein said moving element is at least a part of said trigger (3) .

5. The system of one of claims 1 to 4, wherein said handheld power tool (10) comprises a PCB (30), wherein said PCB (30) comprises said excitation coil (E1) and said measuring coil (M1, M2).

6. The system of claim 5, wherein said PCB (30) comprises said computing module (50).

7. The system of one of claims 5 to 6, wherein said element (3; 4) moves on a trajectory defining a form and wherein the PCB (30) has a shape comprising this form.

8. The system of claim 1, wherein a half of said period (P) is substantially equal to a dimension of said moving element (4), e.g. a width of said element

9. The system of claim 1, wherein the handheld power tool (10) is a power pruning shears, wherein said half of this period (P) is substantially equal to a width of a blade actuating arm (48) of a movable blade (4) of the power pruning shears.

10. The system of one of claims 5 to 7, wherein said handheld power tool (10) comprises an electrically insulator element (60) between the body (9) of the handheld power tool (10) and the PCB (30), so as to electrically isolate said PCB (30) from said body (9).

11. The system of claim 10, wherein said electrically insulator element (60) is made at least in part of a non-electrically conductive and ferromagnetic material, as ferrite.

12. The system of one claims 5 to 7, wherein said PCB is sandwiched between a movable blade (4) and a counter blade (2) .

13. A method for determining an absolute position of a moving element (3; 4) of a handheld power tool (10), wherein a moving element (3; 4) is made at least in part of a ferromagnetic material and/or by an electrically conductive material, wherein said handheld power tool (10) comprises a body (9), said body (9) comprising an actuator, wherein said method comprises:
- conducting by an excitation coil (E1) an alternating excitation current,
- traversing two measuring coils (M1, M2) by a magnetic flux generated by said alternating excitation current, wherein said measuring coils (M1, M2) have a shape having a period (P), wherein said measuring coils are offset by a quarter of said period (P),
- moving said element (3; 4) by a user and/or by said actuator with regard to the body (9), wherein the moving of said element (3;, 4) modifies said magnetic flux,
- determining by a computing module (50) an absolute position of said element (3; 4) based on said magnetic flux.

## Patentansprüche

1. System zum Bestimmen einer absoluten Position eines beweglichen Elements (3, 4) eines handgehaltenen Elektrowerkzeugs (10), wobei das System umfasst:
- das besagte handgehaltene Elektrowerkzeug (10), umfassend:
- einen Körper (9), mit:
- einem Aktuator,
- einer Erregerspule (E1), welche dazu eingerichtet ist, einen alternierenden Erregerstrom zu leiten, worin der alternierende Erregerstrom einen magnetischen Fluss erzeugt, welcher zwei Messspulen (M1, M2) durchquert,
- den besagten Messspulen (M1, M2), worin die besagten Messspulen (M1, M2) eine Form mit einer Periode (P) aufweisen, worin die besagten Messspulen um ein Viertel der besagten Periode (P) versetzt sind,
- ein bewegliches Element (3, 4), welches zumindest teilweise aus einem ferromagnetischen Material und/oder einem elektrisch leitfähigen Material besteht, wobei das besagte Element derart angeordnet ist, um von einem Benutzer und/oder vom besagten Aktuator in Bezug auf den Körper (9) bewegt zu werden, worin das Bewegen des besagten Elements (3, 4) den besagten magnetischen Fluss verändert,
worin das System umfasst:
- ein Rechenmodul (50), welches dazu eingerichtet ist, eine absolute Position des besagten beweglichen Elements (3, 4) basierend auf dem besagten magnetischen Fluss zu bestimmen.

2. System gemäss Anspruch 1, worin das besagte handgehaltene Elektrowerkzeug (10) umfasst
- ein Bearbeitungselement (4),
- ein Trägerelement (2),
worin der Aktuator mit dem Bearbeitungselement (4) verbunden ist, um das Bearbeitungselement (4) in Bezug auf das Trägerelement (2) zu bewegen, worin das besagte bewegliche Element zumindest ein Teil des besagten Bearbeitungselements (4) ist.

3. System gemäss Anspruch 1, worin das besagte handgehaltene Elektrowerkzeug (10) eine elektrische Gartenschere mit einer beweglichen Schneide (4) ist, worin das besagte bewegliche Element zumindest ein Teil der besagten beweglichen Schneide (4) ist.

4. System gemäss Anspruch 1, worin das besagte handgehaltene Elektrowerkzeug (10) umfasst:
- ein Bearbeitungselement (4),
- ein Trägerelement (2),
worin der Aktuator mit dem Bearbeitungselement (4) verbunden ist, um das Bearbeitungselement (4) in Bezug auf das Trägerelement (2) zu bewegen,
- einen Auslöser (3), welcher derart angeordnet ist, um vom Benutzer gedrückt zu werden, um das Bearbeitungselement (4) in Bezug auf das Trägerelement (2) zu bewegen, worin das besagte bewegliche Element zumindest ein Teil des besagten Auslösers (3) ist.

5. System gemäss einem der Ansprüche 1 bis 4, worin das besagte handgehaltene Elektrowerkzeug (10) eine Leiterplatte (30) umfasst, worin die besagte Leiterplatte (30) die besagte Erregerspule (E1) und die besagte Messspule (M1, M2) umfasst.

6. System gemäss Anspruch 5, worin die besagte Leiterplatte (30) das besagte Rechenmodul (50) umfasst.

7. System gemäss einem der Ansprüche 5 bis 6, worin sich das besagte Element (3, 4) auf einer Laufbahn bewegt, welche eine Form definiert, und worin die Leiterplatte (30) eine Form aufweist, welche diese Form umfasst.

8. System gemäss Anspruch 1, worin die Hälfte der Periode (P) im Wesentlichen gleich einer Abmessung des besagten beweglichen Elements (4) ist, z. B. einer Breite des besagten Elements.

9. System gemäss Anspruch 1, worin das handgehaltene Elektrowerkzeug (10) eine elektrische Gartenschere ist, worin die Hälfte der besagten Periode (P) im Wesentlichen gleich einer Breite eines Schneidebetätigungsarms (48) einer beweglichen Schneide (4) der elektrischen Gartenschere ist.

10. System gemäss einem der Ansprüche 5 bis 7, worin das besagte handgehaltene Elektrowerkzeug (10) ein elektrisch isolierendes Element (60) zwischen dem Körper (9) des handgehaltenen Elektrowerkzeugs (10) und der Leiterplatte (30) umfasst, um die besagte Leiterplatte (30) elektrisch vom besagten Körper (9) zu isolieren.

11. System gemäss Anspruch 10, worin das besagte elektrisch isolierende Element (60) zumindest teilweise aus einem nicht elektrisch leitenden und ferromagnetischen Material, beispielsweise Ferrit, besteht.

12. System gemäss einem der Ansprüche 5 bis 7, worin die besagte Leiterplatte zwischen einer beweglichen Schneide (4) und einer Gegenschneide (2) eingeschlossen ist.

13. Verfahren zum Bestimmen einer absoluten Position eines beweglichen Elements (3, 4) eines handgehaltenen Elektrowerkzeugs (10), wobei das bewegliche Element (3, 4) zumindest teilweise aus einem ferromagnetischen Material und/oder aus einem elektrisch leitfähigen Material besteht, worin das handgehaltene Elektrowerkzeug (10) einen Körper (9) umfasst, wobei der besagte Körper (9) einen Aktuator umfasst, worin das besagte Verfahren umfasst:
- Leiten eines alternierenden Erregerstroms durch eine Erregerspule (E1),
- Durchfliessen eines durch den besagten alternierenden Erregerstrom erzeugten magnetischen Flusses in zwei Messspulen (M1, M2), worin die besagten Messspulen (M1, M2) eine Form mit einer Periode (P) aufweisen, worin die besagten Messspulen um ein Viertel der besagten Periode (P) versetzt sind,
- Bewegen des besagten Elements (3, 4) durch einen Benutzer und/oder durch den besagten Aktuator in Bezug auf den Körper (9), worin das Bewegen des besagten Elements (3, 4) den besagten magnetischen Fluss verändert,
- Bestimmen einer absoluten Position des besagten Elements (3, 4) basierend auf dem besagten magnetischen Fluss durch ein Rechenmodul (50).

## Revendications

1. Système pour déterminer une position absolue d'un élément mobile (3 ; 4) d'un outil électrique portatif (10), le système comprenant :
- ledit outil électrique portatif (10), comprenant :
- un corps (9), comprenant :
- un actionneur,
- une bobine d'excitation (E1), agencée pour conduire un courant d'excitation alternatif, dans lequel ledit courant d'excitation alternatif génère un flux magnétique traversant deux bobines de mesure (M1, M2),
- lesdites bobines de mesure (M1, M2), dans lesquelles les bobines de mesure (M1, M2) ont une forme ayant une période (P), dans laquelle lesdites bobines de mesure sont décalées d'un quart de ladite période (P ),
- un élément mobile (3 ; 4), étant fait au moins en partie d'un matériau ferromagnétique et/ou d'un matériau électriquement conducteur, ledit élément étant agencé pour être déplacé par un utilisateur et/ou par ledit actionneur par rapport au corps (9), dans lequel le déplacement dudit élément (3 ; 4) modifie ledit flux magnétique,
dans lequel ledit système comprend :
- un module de calcul (50), arrangé pour déterminer une position absolue dudit élément mobile (3 ; 4) sur la base dudit flux magnétique.

2. Système de la revendication 1, dans lequel l'outil électrique portatif (10) comprend
- un élément d'usinage (4),
- un élément de support (2),
dans lequel l'actionneur est connecté à l'élément d'usinage (4), de manière à déplacer l'élément d'usinage (4) par rapport à l'élément de support (2),
dans lequel ledit élément mobile est au moins une partie dudit élément d'usinage (4).

3. Le système de la revendication 1, dans lequel ledit outil électrique portatif (10) est un sécateur électrique comprenant une lame mobile (4), dans lequel ledit élément mobile est au moins une partie de ladite lame mobile (4).

4. Le système de la revendication 1, dans lequel ledit outil électrique portatif (10) comprend :
- un élément d'usinage (4),
- un élément de support (2),
dans lequel l'actionneur est relié à l'élément d'usinage (4), de manière à déplacer l'élément d'usinage (4) par rapport à l'élément de support (2),
- une gâchette (3) arrangée pour être pressée par l'utilisateur, afin de déplacer l'élément d'usinage (4) par rapport à l'élément de support (2),
dans laquelle l'élément mobile est au moins une partie de la gâchette (3).

5. Le système de l'une des revendications 1 à 4, dans lequel ledit outil électrique portatif (10) comprend un PCB (30), dans lequel ledit PCB (30) comprend ladite bobine d'excitation (E1) et ladite bobine de mesure (M1, M2).

6. Le système de la revendication 5, dans lequel ledit PCB (30) comprend ledit module de calcul (50).

7. Le système de l'une des revendications 5 à 6, dans lequel ledit élément (3 ; 4) se déplace sur une trajectoire définissant un profil et dans lequel le PCB (30) a une forme comprenant ce profil.

8. Le système de la revendication 1, dans lequel la moitié de ladite période (P) est sensiblement égale à une dimension de l'élément mobile (4), par exemple une largeur de l'élément.

9. Le système de la revendication 1, dans lequel l'outil électrique portatif (10) est un sécateur électrique, dans lequel ladite moitié de cette période (P) est sensiblement égale à une largeur d'un bras d'actionnement de lame (48) d'une lame mobile (4) du sécateur électrique.

10. Le système de l'une des revendications 5 à 7, dans lequel ledit outil électrique portatif (10) comprend un élément isolant électrique (60) entre le corps (9) de l'outil électrique portatif (10) et le PCB (30), de manière à isoler électriquement ledit PCB (30) dudit corps (9).

11. Le système de la revendication 10, dans lequel l'élément isolant électrique (60) est fait au moins en partie d'un matériau ferromagnétique et non conducteur d'électricité, tel que la ferrite.

12. Le système de l'une des revendications 5 et 7, dans lequel le PCB est pris en sandwich entre une lame mobile (4) et une contre-lame (2).

13. Procédé de détermination d'une position absolue d'un élément mobile (3 ; 4) d'un outil électrique portatif (10), dans lequel un élément mobile (3 ; 4) est fait au moins en partie d'un matériau ferromagnétique et/ou d'un matériau électriquement conducteur, dans lequel ledit outil électrique portatif (10) comprend un corps (9), ledit corps (9) comprenant un actionneur, dans lequel ledit procédé comprend :
- conduire par une bobine d'excitation (E1) un courant d'excitation alternatif,
- traverser deux bobines de mesure (M1, M2) par un flux magnétique généré par ledit courant d'excitation alternatif, dans lequel lesdites bobines de mesure (M1, M2) ont une forme ayant une période (P), dans lequel lesdites bobines de mesure sont décalées d'un quart de ladite période (P),
- déplacer ledit élément (3 ; 4) par un utilisateur et/ou par ledit actionneur par rapport au corps (9), dans lequel le déplacement dudit élément (3 ; 4) modifie ledit flux magnétique,
- déterminer par un module de calcul (50) une position absolue dudit élément (3 ; 4) en fonction dudit flux magnétique.
